# FASCICULE DE BREVET EUROPEEN

(11) **EP 2 338 776 B1**
(45) Date de publication et mention de la délivrance du brevet: **02.10.2013**
(21) Numéro de dépôt: 10192833.1
(22) Date de dépôt: 29.11.2010
(51) Int. Cl.: B62K 21/06, B62K 19/32

(54) **Jeu de direction de cycle à goupille et cycle comportant un tel jeu de direction**
Zweiradlenkkopf mit Bolzen und Zweirad mit einem solchen Lenkkopf
Cycle steering head with a locking pin and cycle comprising such a steering head

(30) Priorité: 21.12.2009 FR 0959315
(43) Date de publication de la demande: 29.06.2011
(73) Titulaire: Look Cycle International, 58000 Nevers (FR)
(72) Inventeur: Lanz, Matthieu, 58000, NEVERS (FR)
(74) Mandataire: Laget, Jean-Loup

(56) Documents cités:
- EP-A1- 0 520 383
- EP-A1- 1 298 048
- EP-A1- 1 916 182
- EP-A2- 1 162 133
- FR-A- 973 520
- US-A- 5 332 245

## Description

La présente invention est relative à un jeu de direction de cycle utilisé pour relier un tube pivot de fourche à un tube de direction faisant partie d'un cadre de cycle.

Dans ce but, tout jeu de direction comprend un palier inférieur et un palier supérieur, en général des paliers à roulement, qui créent une liaison permettant la rotation du tube pivot par rapport au tube de direction. Il comporte également des moyens de serrage axial des paliers inférieur et supérieur contre une extrémité inférieure respectivement supérieure du tube de direction.

Les moyens de serrage axial des paliers inférieur et supérieur sur les jeux de direction classiques comportent généralement un bouchon situé au sommet du tube de fourche et prenant appui à l'intérieur de celui-ci par un expandeur.

Un problème qui se pose dans les jeux de direction connus est le rattrapage de jeu des paliers et de maintien axial de la potence sur le tube pivot de fourche. Ce problème est généralement résolu par le dispositif décrit dans le brevet FR2829989 de la demanderesse qui propose l'utilisation d'adaptateurs sous forme d'entretoises permettant d'obtenir la hauteur souhaitée et d'assurer le serrage des paliers.

Un autre exemple d'un jeu de direction permettant le rattrapage de jeu des paliers est décrit dans le US5332245. Une bague de compression conique y est utilisée qui est montée coulissante sur le tube pivot de fourche afin d'immobiliser le palier supérieur contre le tube de direction. Des contre-écrous entourent la bague de compression afin de serrer la bague contre le tube de pivot lorsqu'ils coopèrent l'un avec l'autre.

Un nouveau type de jeu de direction comprenant des moyens de serrage axial des paliers inférieur et supérieur est décrit dans le brevet FR2907756 de la demanderesse. Selon ce document, les moyens de serrage comportent une rainure circulaire prévue sur la face extérieure du tube pivot de fourche coopérant avec une nervure sur un élément annulaire élastiquement déformable disposé au-dessus du palier supérieur du jeu de direction de manière à exercer une poussé contre ce palier vers la bas.

Même si ces moyens de serrage axial donnent généralement satisfaction, ils peuvent constituer un inconvénient lors de l'utilisation de fibres de carbone pour la fabrication du tube pivot de fourche qui alors est fabriqué en une seule pièce avec la fourche. Plus précisément, la rainure circulaire pratiquée sur le pourtour du tube pivot de fourche coupe les fibres de carbone et tout l'ensemble se trouve fragilisé à cet endroit.

Il est donc pour l'utilisation de ce matériau souhaitable d'éviter d'effectuer une nervure annulaire sur le tube pivot de fourche.

On connaît en outre un jeu de direction dans lequel les moyens de serrage axial des paliers à roulement comprennent une bague filetée collée sur le tube de pivot de fourche pour coopérer avec un capot annulaire taraudé qui lors de son vissage sur la bague filetée sollicite le palier supérieur vers le bas de manière à serrer les paliers à roulement aux extrémités du tube de direction du cadre. L'utilisation d'une colle entraîne un temps de fabrication plus long du jeu de direction qui par ailleurs ne peut pas être entièrement désassemblé du fait que la bague est collée sur le tube de pivot de fourche.

Le but de l'invention est de remédier à tous ces inconvénients de jeux de direction connus en proposant un jeu de direction dont le tube de pivot de fourche est dépourvu de rainure circulaire et dont les moyens de serrage des paliers inférieur et supérieur assurent un serrage efficace des paliers tout en permettant le désassemblage complet aisé de toutes les pièces du jeu de direction à chaque fois que cela devient nécessaire.

L'objet de l'invention est un jeu de direction de cycle apte à relier un tube pivot de fourche à un tube de direction faisant partie d'un cadre de cycle, composé d'une partie supérieure comprenant un palier supérieur et d'une partie inférieure comprenant un palier inférieur, lesdits paliers supérieur et inférieur étant logés à l'intérieur du tube de direction de manière à permettre la rotation du tube pivot par rapport à celui-ci, et des moyens de serrage axial desdits paliers inférieur et supérieur contre une extrémité inférieure respectivement supérieure du tube de direction, lesdits moyens de serrage axial comportant dans la partie supérieure du jeu de direction une douille filetée enfilée sur le tube pivot de fourche, ladite douille filetée étant rendue solidaire du tube pivot de fourche par des moyens de liaison et est apte à coopérer avec un capot annulaire taraudé enfilé sur le tube pivot de fourche de manière à solliciter le palier supérieur vers le bas lors du vissage dudit capot annulaire taraudé sur ladite douille filetée, caractérisé par le fait que lesdits moyens de liaison comprennent une goupille s'étendant dans deux trous diamétralement opposés de la douille filetée afin d'être logée dans deux trous diamétralement opposés prévus dans le tube pivot de fourche de manière à relier en rotation et en translation la douille filetée au tube pivot de fourche.

Selon d'autres caractéristiques de l'invention :
- lors du montage de ladite douille filetée sur le tube pivot de fourche, lesdits trous diamétralement opposés de la douille filetée et lesdits trous diamétralement opposés du tube pivot de fourche sont alignés les uns sur les autres par des moyens de guidage comprenant un évidement et une saillie de forme complémentaire prévus dans l'interface entre ladite douille filetée et le tube pivot de fourche;
- ledit évidement comporte un méplat prévu sur la face extérieure du tube pivot de fourche en s'étendant jusqu'à l'extrémité libre du tube pivot de fourche pour coopérer avec une saillie constituant une surépaisseur de forme complémentaire prévue sur la face intérieure de ladite douille filetée à l'endroit d'un de ses deux trous opposés;
- deux méplats sont prévus sur la face extérieure du tube pivot de fourche en s'étendant jusqu'à l'extrémité libre du tube pivot de fourche pour coopérer avec deux saillies constituant des surépaisseurs de forme complémentaire prévues sur la face intérieure de ladite douille filetée à l'endroit de ses deux trous opposés;
- la plus grande partie dudit capot annulaire taraudée est apte à être logée à l'intérieur du tube de direction et celui-ci comporte à proximité de son extrémité supérieure deux trous diamétralement opposés permettant le montage et le démontage de ladite goupille;
- ledit capot annulaire taraudée porte à son extrémité supérieure une collerette qui après assemblage se trouve à l'extérieur du tube de direction de manière à s'étendre sur l'extrémité supérieure de celui-ci;
- lesdits trous du tube de direction sont fermés par des bouchons de manière à assurer l'étanchéité;
- ledit capot annulaire est sur sa surface supérieure prévu d'évidements régulièrement disposés autour du trou central dudit capot annulaire et aptes à coopérer avec un outil adapté afin d'entraîner en rotation ledit capot annulaire lors du montage ou du démontage du jeu de direction;
- aux moins deux évidements diamétralement opposés sont prévus sur la surface supérieure dudit capot annulaire,
- lorsque le capot annulaire taraudé est vissé sur la douille filetée, il passe sur les trous dans la douille filetée de manière à emprisonner la goupille 23 dans sa position montée.

L'invention concerne également un cycle comportant un jeu de direction présentant les caractéristiques mentionnées ci-dessus.

D'autres caractéristiques et avantages de l'invention ressortiront de la description qui va suivre de deux modes de réalisation non limitatifs de l'invention, en référence aux figures annexées dans lesquelles :
- la figure 1 est une vue éclatée en perspective montrant une partie d'un cadre de cycle avec son tube de direction, une partie de la fourche avec son tube pivot, ainsi que toutes les pièces du jeu de direction selon un premier mode de réalisation de l'invention;
- la figure 2 est une vue en coupe du jeu de direction de la figure 1, après assemblage sur le tube de direction du cadre de cycle;
- la figure 3 est une vue en coupe montrant un jeu de direction selon un deuxième mode de réalisation de l'invention, après assemblage sur le tube de direction du cadre de cycle; et
- la figure 4 est une vue de dessus, partiellement en coupe, selon les flèches IV sur la figure 3.

Seuls les éléments qui se rapportent directement à l'invention sont représentés sur les figures dans lesquels les éléments identiques ou équivalents portent les mêmes signes de référence.

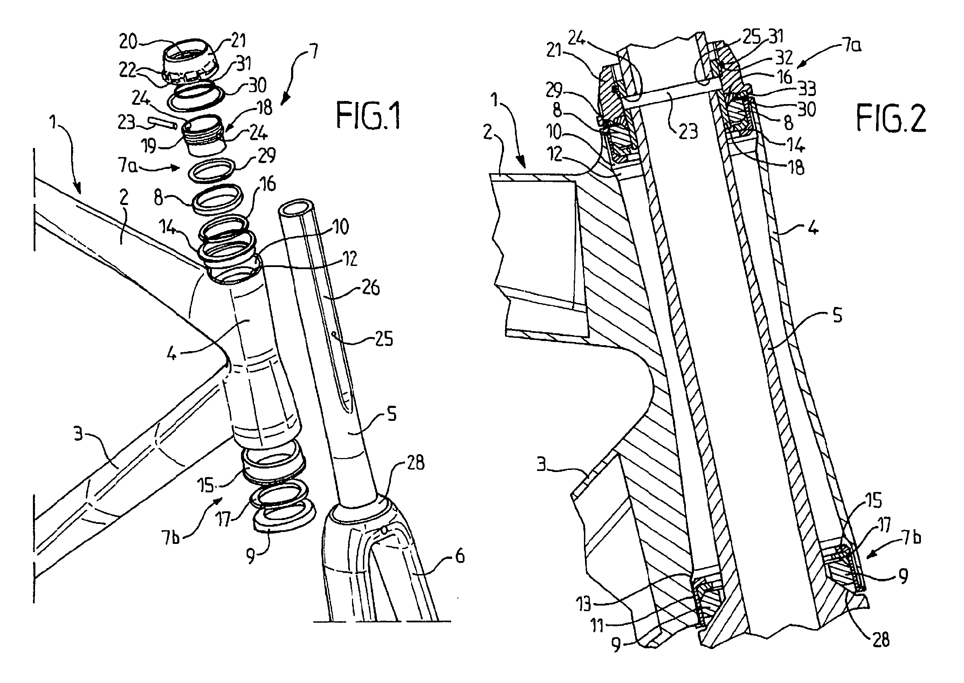

Un premier mode de réalisation sera maintenant décrit en référence aux figures 1 et 2 qui montrent la partie avant d'un cadre de cycle 1.

Un tube horizontal 2 et un tube diagonal 3 sont relié l'un à l'autre par un tube de direction 4 recevant un tube pivot de fourche 5 en une seule pièce avec la fourche proprement dite 6 qui porte la roue avant (non illustré).

Le jeu de direction 7 sert à relier en rotation le tube pivot de fourche 5 au tube de direction 4. Le jeu de direction 7 est composé d'un partie supérieure 7a comprenant un palier supérieur 8 et d'une partie inférieure 7b comprenant un palier inférieur 9. Les paliers supérieur 8 et inférieur 9 sont disposés à l'extrémité supérieure respectivement inférieure du tube de direction 4 de manière à constituer une liaison en rotation entre ces deux tubes.

Les paliers supérieur et inférieur 8, 9 sont reçus dans un logement supérieur 10 respectivement un logement inférieur 11 qui sont délimités vers l'intérieur par un épaulement annulaire respectif 12, 13 (voir figure 2).

Les paliers supérieur et inférieur 8, 9 sont disposés dans leur logement respectif 10, 11 avec interposition d'un insert annulaire respectif 14, 15, de préférence en aluminium. Si besoin en est, une bague fendue de rattrapage de jeu 16, 17 selon le brevet FR2829989 est disposée entre l'insert annulaire et le palier respectif 8, 9.

Afin d'éliminer le débattement axial des paliers supérieur et inférieur 8, 9, le jeu de direction 7 comporte des moyens de serrage axial des paliers 8, 9 qui les sollicitent l'un en direction de l'autre.

Selon l'invention, ces moyens de serrage axial des paliers 8, 9 comportent dans la partie supérieure 7a du jeu de direction 7 une douille filetée 18 enfilée sur le tube pivot de fourche 5; Dans l'exemple illustré, la douille filetée 18 s'étend de manière à se trouver insérée entre le palier supérieur 8 et le tube pivot de fourche 5.

Cette douille filetée 18 est à l'aide de moyens de liaison rendue solidaire en rotation et en translation du tube pivot de fourche 5. Le filet 19 de la douille 18 est apte à coopérer avec le taraudage 20 d'un capot annulaire taraudé 21 qui sur sa périphérie extérieure présente des protubérances 22 destinées à améliorer la prise lors du vissage, qu'il soit effectué manuellement ou à l'aide d'un outil.

Le filet 19 de la douille 18 s'étend sur une partie d'extrémité supérieure de la douille, cette partie d'extrémité présentant une surépaisseur par rapport au reste de la douille qui est lisse et qui représente environ 3/4 de la longueur de la douille.

Selon une caractéristique importante de l'invention, les moyens de liaison qui relient la douille 18 au tube pivot de fourche 5 comprennent une goupille 23 qui s'étend dans deux trous diamétralement opposés 24 de la douille filetée 18 afin d'être logée dans deux trous diamétralement opposés 25 prévus dans le tube pivot de fourche 5 de manière à relier en rotation la douille filetée à ce dernier et de verrouiller axialement ces deux éléments l'un par rapport à l'autre.

Lors du montage de la douille filetée 18 sur le tube pivot de fourche 5, les trous diamétralement opposés 24 de la douille filetée 18 et lesdits trous diamétralement opposés 25 du tube pivot de fourche 5 sont alignés les uns sur les autres par des moyens de guidage comprenant au moins un évidement 26 et au moins une saillie 27 de forme complémentaire prévus dans l'interface entre ladite douille filetée et le tube pivot de fourche.

Dans l'exemple illustré, deux évidements 26 sont prévus. Chaque évidement est ici constitué par un méplat effectué sur la face extérieure du tube pivot de fourche dans lequel un des trous opposés 25 du tube pivot de fourche 5 est disposé. Le méplat 26 est allongé et s'étend jusqu'à l'extrémité libre du tube pivot de fourche 5 afin de coopérer avec une saille 27 constituant une surépaisseur prévue sur la douille filetée 18 à l'endroit des deux trous diamétralement opposés 24 de celle-ci.

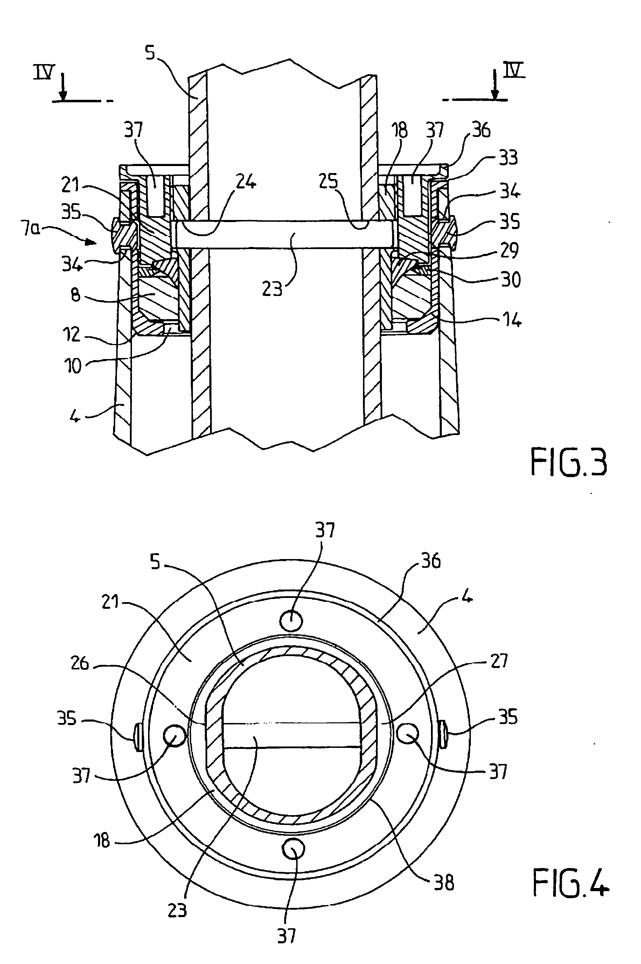

La saillie 27 est visible sur la figure 4 qui sera décrite plus tard en référence au deuxième mode de réalisation.

De cette manière, les méplats 26 et les saillies 27 servent de moyen de guidage lors de l'assemblage du jeu de direction 1 autour du tube pivot de fourche 5 pour aligner les trous 24 de la douille 18 sur les trous 25 du tube pivot de fourche 5 et pour, après assemblage, contribuer à la solidarisation en rotation de la douille avec celui-ci et au renforcement de la zone autour des trous 24 dans la douille filetée 18.

On peut également envisager de prévoir un seul méplat 26 sur le tube pivot de fourche 5 et une seule saillie de forme complémentaire 27 sur la face intérieur de la douille filetée 18 pour obtenir la même fonctionnalité de guidage et de solidarisation en rotation de ces deux pièces, même s'il est préférable d'en prévoir deux pour des raisons de rigidité.

L'assemblage du jeu de direction 7 selon l'invention est très simple à effectuer. Les inserts annulaires supérieur et inférieur 14, 15 sont lors de la fabrication du cadre collés dans leur logement respectif 10, 11 aux extrémités du tube de direction 4. On commence par la partie inférieure 7b en enfilant le palier 9 et, le cas échéant, la bague fendue d'attrapage de jeu 17 sur le tube pivot de fourche 5 de sorte que le palier 9 repose sur une portée tronconique 28 sur la fourche 6, à l'extrémité basse du tube pivot.

Ensuite, on introduit le tube pivot de fourche 5 dans le tube de direction 4 de sorte que son extrémité libre fasse saillie hors de ce tube pour rendre les trous 25 du tube pivot 5 accessibles au-dessus du tube de direction 4. Les pièces de la partie supérieure 7a du jeu de direction 7 sont ensuite enfilées sur le tube pivot 5, en disposant, le cas échéant, la bague fendue de rattrapage 16 et ensuite le palier 8 dans l'insert annulaire supérieur 14 précollé dans le logement supérieur 10 du tube de direction 4.

Une bague de compression 29 est avantageusement disposée sur le palier 8, ainsi qu'un premier joint d'étanchéité 30 fixé préalablement au capot annulaire 21 et recouvrant au moins une partie périphérique de l'extrémité supérieure de l'insert annulaire 14.

La douille filetée 18 est ensuite enfilée sur le tube pivot de fourche 5 et glissée vers le bas en étant guidée par ses saillies 27 qui coopèrent avec les méplats 26 du tube pivot de fourche 5 jusqu'à ce que les trous 24 de la douille 18 soit alignés sur les trous 25 du tube pivot de fourche 5. La goupille 23 peut alors être insérée dans les trous 24, 25 afin de solidariser en rotation et en translation la douille 18 avec le tube pivot de fourche 5.

Pour terminer l'assemblage, un deuxième joint d'étanchéité 31 est placé dans une gorge 32 prévue à l'intérieur du capot annulaire taraudé 21 qui ensuite est vissé sur la douille filetée 18 en exerçant une poussée contre le palier supérieur 8 par l'intermédiaire de la bague de compression 29.

Lorsque le capot annulaire taraudé 21 est vissé sur la douille filetée 18, il passe sur les trous 24 dans la douille filetée 18 de manière à emprisonner la goupille 23 dans sa position montée.

Bien entendu, les pièces sont dimensionnées de telle sorte que lorsque le capot annulaire 21 est suffisamment vissé sur la douille filetée 18 pour obtenir le serrage souhaité, l'extrémité inférieure du capot annulaire 22 se trouve à proximité de l'extrémité libre du tube pivot de fourche 5 pour n'y laisser qu'un petit interstice 33 entre ces deux éléments.

Les figures 3 et 4 illustrent un deuxième mode de réalisation qui diffère du premier mode de réalisation essentiellement par le fait que le capot annulaire taraudé 21 est pratiquement intégré dans le tube de direction 4.

Plus précisément, la plus grande partie du capot annulaire taraudé 21 est dimensionnée pour être disposée à l'intérieur de tube de direction 4. Cependant, cela a pour conséquence que les trous 25 dans le tube pivot de fourche 5 ainsi que les trous 24 dans la douille filetée 18 ne sont plus directement accessibles de l'extérieur. Pour cette raison, deux trous diamétralement opposés 34 sont effectués dans le tube de direction 4, à proximité de l'extrémité de celui-ci. Ces trous 34 permettent ainsi l'introduction de la goupille 23 dans les trous 24, 25 pour rendre la douille filetée 18 solidaire en rotation avec le tube pivot de fourche 5 et pour la verrouiller axialement sur celui-ci.

Les trous 34 du tube de direction 4 sont fermés par des bouchons 35 de manière à assurer l'étanchéité tout en améliorant l'esthétique de l'ensemble.

Le capot annulaire taraudée 21 porte selon ce mode de réalisation à son extrémité supérieure une collerette 36 qui après assemblage reste à l'extérieur du tube de direction 4 de manière à s'étendre sur l'extrémité supérieure de celui-ci.

Afin de permettre le vissage de ce capot annulaire taraudée 21 sur la douille filetée 18, le capot est sur sa face supérieur pourvu d'évidements qui dans l'exemple illustré sont en forme d'alésages 37 permettant l'utilisation d'un outil approprié (non représenté) présentant des saillies complémentaires des alésages pour faire tourner le capot annulaire dans un sens ou dans l'autre pour le montage respectivement le démontage.

Dans l'exemple illustré, ces alésages sont au nombre de quatre disposés régulièrement répartis autour du trou central 38 du capot annulaire 21.

Bien entendu, il est envisageable de prévoir seulement deux alésages en les disposant diamétralement opposés autour du trou central 38.

La surface supérieure de la douille filetée 18 selon le deuxième mode de réalisation est de préférence couverte par une rondelle de protection (non illustrée) qui peut sur sa face inférieure présenter des protubérances adaptées pour entrer dans les alésages 37. Une telle rondelle, sans protubérances, peut être constituée par l'insert annulaire décrit dans la demande de brevet FR0504817 de la demanderesse qui est relative à une potence de cycle à inclinaison réglable.

Le jeu de direction selon l'invention n'est pas limité à l'utilisation sur un tube pivot de fourche en fibre de carbone, mais peut bien entendu être utilisé sur des éléments plus classiques en métal.

L'invention n'est pas non plus limitée aux exemples illustrés et décrits, mais l'homme de métier peut aisément envisager d'autres variantes, par exemple avec utilisation d'autres types de palier que les paliers à roulement, sans pour autant sortir du cadre de l'invention.

## Revendications

1. Jeu de direction de cycle (7) apte à relier un tube pivot de fourche (5) à un tube de direction (4) faisant partie d'un cadre de cycle (1), composé d'une partie supérieure (7a) comprenant un palier supérieur (8) et d'une partie inférieure (7b) comprenant un palier inférieur (9), lesdits paliers supérieur et inférieur (8, 9) étant logés à l'intérieur du tube de direction (4) de manière à permettre la rotation du tube pivot de fourche (5) par rapport à celui-ci, et des moyens de serrage axial (18, 21) desdits paliers inférieur et supérieur (8, 9) contre une extrémité inférieure respectivement supérieure du tube de direction (4), lesdits moyens de serrage axial comportant dans la partie supérieure (7a) du jeu de direction (7) une douille filetée (18) enfilée sur le tube pivot de fourche (5), ladite douille filetée (18) étant rendue solidaire du tube pivot de fourche (5) par des moyens de liaison (23, 24, 25) et est apte à coopérer avec un capot annulaire taraudé (21) enfilé sur le tube pivot de fourche (5) de manière à solliciter le palier supérieur (8) vers le bas lors du vissage dudit capot annulaire taraudé (21) sur ladite douille filetée (18), **caractérisé par le fait que** lesdits moyens de liaison comprennent une goupille (23) s'étendant dans deux trous diamétralement opposés (24) de la douille filetée (18) afin d'être logée dans deux trous diamétralement opposés (25) prévus dans le tube pivot de fourche (5).

2. Jeu de direction selon la revendication 1, **caractérisé par le fait que** lors du montage de ladite douille filetée (18) sur le tube pivot de fourche (5) lesdits trous diamétralement opposés (24) de la douille filetée (18) et lesdits trous diamétralement opposés (25) du tube pivot de fourche (5) sont alignés les uns sur les autres par des moyens de guidage comprenant un évidement (26) et une saillie (27) de forme complémentaire prévus dans l'interface entre ladite douille filetée (18) et le tube pivot de fourche (5).

3. Jeu de direction selon la revendication 2, **caractérisé par le fait que** ledit évidement comporte un méplat (26) prévu sur la face extérieure du tube pivot de fourche (5) en s'étendant jusqu'à l'extrémité libre du tube pivot de fourche (5) pour coopérer avec ladite saillie (27) qui constitue une surépaisseur de sur la face intérieure de ladite douille filetée (18) à l'endroit d'un de ses deux trous opposés (24).

4. Jeu de direction selon la revendication 3, **caractérisé par le fait que** deux méplats (26) sont prévus sur la face extérieure du tube pivot de fourche (5) en s'étendant jusqu'à l'extrémité libre du tube pivot de fourche (5) pour coopérer avec deux saillies (27) constituant des surépaisseurs de forme complémentaire prévues sur la face intérieure de ladite douille filetée (18) à l'endroit de ses deux trous opposés (24).

5. Jeu de direction selon l'une quelconque des revendications précédentes, **caractérisé par le fait que** la plus grande partie dudit capot annulaire taraudée (21) est apte à être logée à l'intérieur du tube de direction (4) et que celui-ci comporte à proximité de son extrémité supérieure deux trous diamétralement opposés (34) permettant le montage et le démontage de ladite goupille (23).

6. Jeu de direction selon la revendication 5, **caractérisé par le fait que** ledit capot annulaire taraudée (21) porte à son extrémité supérieure une collerette (36) qui après assemblage se trouve à l'extérieur du tube de direction (4) de manière à s'étendre sur l'extrémité supérieure de celui-ci.

7. Jeu de direction selon la revendication 5 ou 6, **caractérisé par le fait que** lesdits trous (34) du tube de direction (4) sont fermés par des bouchons (35) de manière à assurer l'étanchéité.

8. Jeu de direction selon l'une quelconque des revendications précédentes, **caractérisé par le fait que** ledit capot annulaire (21) est sur sa surface supérieure prévu d'évidements (37) régulièrement disposés autour du trou central (38) dudit capot annulaire (21) et aptes à coopérer avec un outil adapté afin d'entraîner en rotation ledit capot annulaire (21) lors du montage ou du démontage du jeu de direction (7).

9. Jeu de direction selon la revendication 8, **caractérisé par le fait qu'**au moins deux évidements diamétralement opposés (37) sont prévus sur la surface supérieure dudit capot annulaire (21).

10. Jeu de direction selon l'une quelconque des revendications précédentes, **caractérisé par le fait que** lorsque le capot annulaire taraudé (21) est vissé sur la douille filetée (18), il passe sur les trous (24) dans la douille filetée (18) de manière à emprisonner la goupille 23 dans sa position montée.

11. Cycle comportant un jeu de direction selon l'une quelconque des revendications 1 à 10.

## Patentansprüche

1. Zweirad-Lenkkopf (7), der imstande ist, ein Gabelschwenkrohr (5) mit einem Lenkrohr (4) als Teil eines Zweiradrahmens (1) zu verbinden, der aus einem oberen Teil (7a), der einen oberen Absatz (8) umfasst, und einem unteren Teil (7b), der einen unteren Absatz (9) umfasst, zusammengesetzt ist, wobei der obere und untere Absatz (8, 9) im Lenkrohr (4) derart untergebracht sind, dass die Rotation des Gabelschwenkrohrs (5) im Verhältnis zu diesem möglich ist, und axialen Spannmitteln (18, 21) des unteren und oberen Absatzes (8, 9) gegen ein unteres beziehungsweise oberes Ende des Lenkrohrs (4), wobei die axialen Spannmittel im oberen Teil (7a) des Lenkkopfs (7) eine Gewindehülse (18) aufweist, die auf dem Gabelschwenkrohr (5) aufgefädelt ist, wobei die Gewindehülse (18) mit dem Gabelschwenkrohr (5) anhand von Verbindungsmitteln (23, 24, 25) verbunden ist und imstande, mit einer ringförmigen Gewindekappe (21) zusammenzuarbeiten, die derart auf dem Gabelschwenkrohr (5) aufgefädelt ist, dass der obere Absatz (8) beim Schrauben der ringförmigen Gewindekappe (21) auf die Gewindehülse (18) nach unten beansprucht wird, **dadurch gekennzeichnet, dass** die Verbindungsmittel einen Stift (23) umfassen, der sich in zwei diametral entgegengesetzten Löchern (24) der Gewindehülse (18) erstreckt, um in zwei diametral entgegengesetzten Löchern (25) untergebracht zu sein, die im Gabelschwenkrohr (5) vorgesehen sind.

2. Lenkkopf nach Anspruch 1, **dadurch gekennzeichnet, dass** bei der Montage der Gewindehülse (18) auf dem Gabelschwenkrohr (5) die diametral entgegengesetzten Löcher (24) der Gewindehülse (18) und die diametral entgegengesetzten Löcher (25) des Gabelschwenkrohrs (5) anhand von Führungsmitteln miteinander fluchten, die eine Aussparung (26) und einen komplementär geformten Vorsprung (27) umfassen, die in der Schnittstelle zwischen der Gewindehülse (18) und dem Gabelschwenkrohr (5) vorgesehen sind.

3. Lenkkopf nach Anspruch 2, **dadurch gekennzeichnet, dass** die Aussparung eine Abflachung (26) aufweist, die auf der Außenseite des Gabelschwenkrohrs (5) vorgesehen ist, indem sie sich bis zum freien Ende des Gabelschwenkrohrs (5) erstreckt, um mit dem Vorsprung (27) zusammenzuarbeiten, der auf der Innenseite der Gewindehülse (18) an der Stelle eines ihrer beiden gegenüberliegenden Löcher (24) eine Überdicke darstellt.

4. Lenkkopf nach Anspruch 3, **dadurch gekennzeichnet, dass** auf der Außenseite des Gabelschwenkrohrs (5) zwei Abflachungen (26) vorgesehen sind, indem sie sich bis zum freien Ende des Gabelschwenkrohrs (5) erstrecken, um mit zwei Vorsprüngen (27) zusammenzuarbeiten, die komplementär geformte Überdicken darstellen, die auf der Innenseite der Gewindehülse (18) an der Stelle ihrer beiden gegenüberliegenden Löcher (24) vorgesehen sind.

5. Lenkkopf nach einem der vorangehenden Ansprüche, **dadurch gekennzeichnet, dass** der größte Teil der ringförmigen Gewindekappe (21) imstande ist, im Lenkrohr (4) untergebracht zu sein, und dass dieses in der Nähe seines oberen Endes zwei diametral entgegengesetzte Löcher (34) aufweist, die die Montage und die Demontage des Stifts (23) erlauben.

6. Lenkkopf nach Anspruch 5, **dadurch gekennzeichnet, dass** die ringförmige Gewindekappe (21) an ihrem oberen Ende einen Halsring (36) trägt, der sich nach dem Zusammenbau derart außerhalb des Lenkrohrs (4) befindet, dass er sich über dem oberen Ende desselben erstreckt.

7. Lenkkopf nach Anspruch 5 oder 6, **dadurch gekennzeichnet, dass** die Löcher (34) des Lenkrohrs (4) durch Stopfen (35) verschlossen sind, um Dichtigkeit abzusichern.

8. Lenkkopf nach einem der vorangehenden Ansprüche, **dadurch gekennzeichnet, dass** die ringförmige Kappe (21) auf ihrer oberen Fläche Aussparungen (37) aufweist, die um ein zentrales Loch (38) der ringförmigen Kappe (21) gleichmäßig beabstandet sind und imstande, mit einem geeigneten Werkzeug zusammenzuarbeiten, um die ringförmige Kappe (21) bei der Montage oder Demontage des Lenkkopfs (7) rotierend anzutreiben.

9. Lenkkopf nach Anspruch 8, **dadurch gekennzeichnet, dass** auf der oberen Fläche der ringförmigen Kappe (21) mindestens zwei diametral entgegengesetzte Aussparungen (37) vorgesehen sind.

10. Lenkkopf nach einem der vorangehenden Ansprüche, **dadurch gekennzeichnet, dass**, wenn die ringförmige Gewindekappe (21) auf die Gewindehülse (18) geschraubt wird, sie über die Löcher (24) in die Gewindehülse (18) gelangt, so dass der Stift (23) in seiner montierten Stellung eingeschlossen wird.

11. Zweirad, das einen Lenkkopf nach einem der Ansprüche 1 bis 10 aufweist.

## Claims

1. A cycle headset (7) capable of connecting a fork pivoting tube (5) to a head tube (4) that is part of a cycle frame (1), made up of an upper part (7a) comprising an upper bearing (8) and a lower part (7b) comprising a lower bearing (9), said upper and lower bearings (8, 9) being housed inside the head tube (4) so as to allow the fork pivoting tube (5) to rotate relative thereto, and axial gripping means (18, 21) for gripping said lower and upper bearings (8, 9) against a lower, upper, respectively, end of the head tube (4), said axial gripping means including, in the upper part (7a) of the headset (7), a threaded bush (18) slipped on the fork pivoting tube (5), said threaded bush (18) being secured to the fork pivoting tube (5) by linking means (23, 24, 25) and is capable of cooperating with a tapped annular cover (21) slipped on the fork pivoting tube (5) so as to bias the upper bearing (8) downward during screwing of said tapped annular cover (21) on said threaded bush (18), **characterized in that** said linking means comprise a pin (23) extending in two diametrically opposite holes (24) of the threaded bush (18) so as to be housed in two diametrically opposite holes (25) provided in the fork pivoting tube (5).

2. The headset according to claim 1, **characterized in that** during mounting of said threaded bush (18) on the fork pivoting tube (5), said diametrically opposite holes (24) of the threaded bush (18) and said diametrically opposite holes (25) of the fork pivoting tube (5) are aligned with one another by guide means comprising a recess (26) and a projection (27) with a complementary shape that are provided in the interface between said threaded bush (18) and said fork pivoting tube (5).

3. The headset according to claim 2, **characterized in that** said recess includes a flat (26) provided on the outer face of the fork pivoting tube (5) extending as far as the free end of the fork pivoting tube (5) to cooperate with said projection (27) that constitutes an overthickness on the inner face of said threaded bush (18) at one of its two opposite holes (24).

4. The headset according to claim 3, **characterized in** the two flats (26) are provided on the outer face of the fork pivoting tube (5) extending as far as the free end of the fork pivoting tube (5) to cooperate with two projections (27) constituting overthicknesses with complementary shapes provided on the inner face of said threaded bush (18) at one of its two opposite holes (24).

5. The headset according to any one of the preceding claims, **characterized in that** the largest part of said tapped annular cover (21) can be housed inside the head tube (4) and the latter includes, near its upper end, two diametrically opposite holes (34) allowing the assembly and disassembly of said pin (23).

6. The headset according to claim 5, **characterized in that** said tapped annular cover (21) has, at its upper end, a flange (36) which, after assembly, is located outside the head tube (4) so as to extend over the upper end thereof.

7. The headset according to claim 5 or 6, **characterized in that** said holes (34) of the head tube (4) are closed by stoppers (35) so as to ensure sealing.

8. The headset according to any one of the preceding claims, **characterized in that** said annular cover (21) is provided, on the upper surface thereof, with recesses (37) regularly positioned around the central hole (38) of said annular cover (21) and capable of cooperating with a suitable tool so as to rotate said annular cover (21) during assembly or disassembly of the headset (7).

9. The headset according to claim 8, **characterized in that** at least two diametrically opposite recesses (37) are provided on the upper surface of said annular cover (21).

10. The headset according to any one of the preceding claims, **characterized in that** when said tapped annular cover (21) is screwed on the threaded bush (18), it passes over the holes (24) in the threaded bush (18) so as to imprison the pin (23) in its mounted position.

11. A cycle including a headset according to any one of claims 1 to 10.
